# EUROPÄISCHE PATENTSCHRIFT

(11) **EP 4 549 268 B1**
(45) Veröffentlichungstag und Bekanntmachung des Hinweises auf die Patenterteilung: **13.05.2026**
(21) Anmeldenummer: 24208958.9
(22) Anmeldetag: 25.10.2024
(51) Int. Cl.: B60W 10/08, B60W 10/192, B60W 10/20, B60W 30/02, B60W 50/08, B60W 50/14, B60T 8/1755, B60T 8/1761

(54) **VERFAHREN ZUR STEUERUNG DES RADSCHLUPFS EINES KRAFTFAHRZEUGS, STEUERGERÄT UND KRAFTFAHRZEUG**
METHOD FOR CONTROLLING THE WHEEL SLIP OF A MOTOR VEHICLE, CONTROL DEVICE AND MOTOR VEHICLE
PROCÉDÉ DE COMMANDE DU PATINAGE DE ROUE D'UN VÉHICULE AUTOMOBILE, APPAREIL DE COMMANDE ET VÉHICULE AUTOMOBILE

(30) Priorität: 02.11.2023 BE 202305904
(43) Veröffentlichungstag der Anmeldung: 07.05.2025
(73) Patentinhaber: thyssenkrupp Presta Aktiengesellschaft, 9492 Eschen (LI); thyssenkrupp AG, 45143 Essen (DE)
(72) Erfinder: Lapis, Leonard, 9466 Sennwald (CH)
(74) Vertreter: thyssenkrupp Intellectual Property GmbH

(56) Entgegenhaltungen:
- EP-B1- 3 694 766
- US-A1- 2020 247 394
- US-A1- 2023 311 849
- US-A1- 2023 322 207

## Beschreibung

Die Erfindung betrifft ein Verfahren zur Steuerung des Radschlupfs eines Kraftfahrzeugs, ein Steuergerät und ein Kraftfahrzeug.

Das Dokument US2023/311849 beschreibt ein Verfahren zur Steuerung von Aktuatoren, die auf die Räder eines Kraftfahrzeugs wirken, um die Bewegungssteuerung für autonomes und manuelles Fahren zu verbessern. Das Verfahren im Dokument US2023/311849 zielt darauf ab, eine koordinierte Aktuatoroperation und optimiert den Fahrzeugbetrieb unter Berücksichtigung von Einschränkungen wie reibwertbedingten Begrenzungen der Radkräfte und Limitierungen der Aktuatoren zu ermöglichen.

Zur Fortbewegung eines Kraftfahrzeugs werden Längs- und Seitenkräfte zwischen den Rädern bzw. Reifen und der Fahrbahn übertragen. Dabei ist die Fahrstabilität des Kraftfahrzeugs gegeben, solange die maximal übertragbaren Längs- und Querkräfte, d. h. das verfügbare Kraftpotential bzw. die Haftgrenze, der Räder nicht überschritten werden.

Die maximal übertragbare Längs- und Querkraft eines Rades hängen im Besonderen vom Radschlupf, von der Radlast sowie vom Reibwert zwischen dem Rad und der Fahrbahn ab. Da die Radlast und der Reibwert nur bedingt steuerbar sind, ist der Radschlupf die wesentliche Stellgröße, um die Fahrstabilität eines Kraftfahrzeugs aktiv sicherzustellen.

Die Steuerung des Radschlupfs erfolgt typischerweise durch Radaktuatoren, die die Räder abbremsen und/oder beschleunigen, um die Ist-Längs- und Ist-Querschlupfwerte der Räder an Soll-Längs- und Soll-Querschlupfwerte anzugleichen. Dabei ist bekannt, die Soll-Längs- und Soll-Querschlupfwerte auf Basis einer Soll-Trajektorie zu ermitteln, die von einer Mensch-Maschine-Schnittstelle, beispielsweise einem Bediensystem mit Lenkrad, Pedalen und/oder Schalthebel, oder einer Software für automatisiertes und/oder autonomes Fahren bereitgestellt wird.

Die Steuerung des Radschlupfs ist mit der Überwindung von Trägheiten verbunden und mit Modell- bzw. Schätzfehlern behaftet. Um die Fahrstabilität des Kraftfahrzeugs in jeder Situation sicherzustellen, erfolgt die Steuerung daher üblicherweise mit einem Sicherheitsabstand zur Haftgrenze, also so, dass das verfügbare Kraftpotential der Räder nur bis zu einem gewissen Grad ausgenutzt wird. Dies kann allerdings, insbesondere in Extremsituationen, zu Abweichungen von der Soll-Trajektorie führen und auf diese Weise die Fahrsicherheit einschränken.

Der Erfindung liegt daher die Aufgabe zu Grunde, ein Verfahren anzugeben, das eine Steuerung des Radschlupfs eines Kraftfahrzeugs mit reduziertem Sicherheitsabstand zur Haftgrenze der Räder ermöglicht. Der Erfindung liegt ferner die Aufgabe zu Grunde, ein entsprechendes Steuergerät sowie ein Kraftfahrzeug anzugeben.

Erfindungsgemäß wird die Aufgabe mit Blick auf das Verfahren durch den Gegenstand des Anspruchs 1, mit Blick auf das Steuergerät durch den Gegenstand des Anspruchs 6 und mit Blick auf das Kraftfahrzeug durch den Gegenstand des Anspruchs 7 gelöst.

Konkret wird die Aufgabe durch ein Verfahren zur Steuerung des Radschlupfs eines Kraftfahrzeugs, das wenigstens zwei Räder, ein elektromechanisches Bremssystem, ein elektrisches Antriebssystem und ein Steer-by-Wire-Lenksystem aufweist, gelöst.

Das Verfahren umfasst folgende Schritte:
- Übersetzen einer Soll-Trajektorie des Kraftfahrzeugs in eine Soll-Bewegung des Kraftfahrzeugs;
- Bestimmen von radindividuellen Soll-Längs- und Soll-Querschlupfwerten für die Räder basierend auf der Soll-Bewegung unter Verwendung eines Fahrzeug- und Reifenmodells; und
- Angleichen von Ist-Längs- und Ist-Querschlupfwerten der Räder an die jeweiligen Soll-Längs- und Soll-Querschlupfwerte durch das elektromechanische Bremssystem und das elektrische Antriebssystem in Abhängigkeit von einem Lenkwinkel des Steer-by-Wire-Lenksystems.

Das erfindungsgemäße Verfahren beruht zum einen auf dem Gedanken, die Soll-Trajektorie in einem Zwischenschritt in eine Soll-Bewegung des Kraftfahrzeugs zu übersetzen. Dadurch können die Soll-Längs- und Soll-Querschlupfwerte mittels eines Fahrzeug- und Reifenmodells so bestimmt werden, dass sie die Soll-Bewegung besonders präzise abbilden. Auf diese Weise werden Modell- bzw. Schätzfehler bei der Ermittlung der Soll-Längs- und Soll-Querschlupfwerte reduziert, sodass nur ein geringer Sicherheitsabstand zur Haftgrenze der Räder eingehalten werden muss.

Zum anderen ist vorteilhafterweise vorgesehen, zum Angleichen der Ist-Längs- und Ist-Querschlupfwerte an die Soll-Längs- und Soll-Querschlupfwerte ein elektromechanisches Bremssystem und ein elektrisches Antriebssystem zu verwenden. Diese Systeme ermöglichen aufgrund ihrer reduzierten Trägheiten ein besonders schnelles Angleichen der Ist-Längs- und Ist-Querschlupfwerte an die Soll-Längs- und Soll-Querschlupfwerte, sodass der erforderliche Sicherheitsabstand zur Haftgrenze vorteilhafterweise weiter reduziert ist.

Die im Zusammenhang mit dem Verfahren genannten Vorteile gelten in entsprechender Weise auch für das erfindungsgemäße Steuergerät. Die im Zusammenhang mit dem Verfahren beschriebenen Verfahrensschritte sind auch im Zusammenhang mit dem Steuergerät offenbart und zwar in der Form, dass das Steuergerät dazu konfiguriert bzw. angepasst ist, diese Verfahrensschritte durchzuführen.

Unter einer Trajektorie wird insbesondere die zeitliche Entwicklung der Position des Kraftfahrzeugs, also insbesondere die Kombination aus der Route bzw. dem Fahrweg und dem Geschwindigkeitsprofil entlang der Route, verstanden. Unter dem Längs- bzw. Querschlupf eines Rades wird insbesondere das Verhältnis der Längs bzw. der Quergeschwindigkeit am Radaußenumfang zur Längs bzw. Quergeschwindigkeit am Radmittelpunkt verstanden. Unter der Radlast wird insbesondere die Kraft verstanden, die senkrecht zur Fahrbahn von ihr auf das Rad wirkt.

Die Begriffe Rad und Reifen werden vorliegend synonym verwendet. Der Begriff Steuerung wird hier nicht im regelungstechnisch strengen Sinn verstanden, sondern umfasst auch eine Regelung (closed control). Die Erfindung betrifft somit insbesondere auch ein Verfahren zur Regelung eines des Radschlupfs sowie ein entsprechendes Steuergerät und Kraftfahrzeug.

Bevorzugte Ausführungsformen der Erfindung sind in den Unteransprüchen angegeben.

In einer vorteilhaften Ausführungsform der Erfindung werden die Soll-Längs- und Soll-Querschlupfwerte basierend auf den Ist-Längs- und Ist-Querschlupfwerten bestimmt. Vorteilhafterweise fließen also die Ist-Längs- und Ist-Querschlupfwerte in die Bestimmung der nächsten Soll-Längs- und Soll-Querschlupfwerte mit ein. Mit einer solchen dynamischen Steuerung des Radschlupfs, insbesondere einer Closed-Loop-Steuerung, kann vorteilhafterweise auf Abweichungen von der Soll-Bewegung, beispielsweise aufgrund von Störungen in der Realität, schneller reagiert werden, sodass der Sicherheitsabstand zur Haftgrenze der Räder vorteilhafterweise weiter reduziert werden kann.

Erfindungsgemäß bildet das Fahrzeug- und Reifenmodell das Verhältnis von Längs- und Querschlupfwerten der Räder zu maximal übertragbaren Längs- und Querkräften der Räder ab. Durch die Berücksichtigung der maximal übertragbaren Längs- und Querkräfte beim Bestimmen der Soll-Längs- und Soll-Querschlupfwerte kann das verfügbare Reifenkraftpotential vorteilhafterweise besser ausgenutzt werden.

Für ein besonders präzises Bestimmen der Soll-Längs- und Soll-Querschlupfwerte ist es vorteilhaft, wenn das Fahrzeug- und Reifenmodell das Verhältnis der Längs- und Querschlupfwerte zu den maximal übertragbaren Längs- und Querkräften in Abhängigkeit von Radlasten der Räder abbildet, insbesondere in Abhängigkeit von prognostizierten, statischen und/oder dynamischen Radlasten der Räder.

Um die Soll-Längs- und Soll-Querschlupfwerte noch präziser zu bestimmen, wird das Verhältnis der Längs- und Querschlupfwerten zu den maximal übertragbaren Längs- und Querkräften vorteilhafterweise in Abhängigkeit von einem Reibwert, insbesondere einem geschätzten Reibwert, zwischen den Rädern und der Fahrbahn abgebildet.

Vorzugsweise wird die Soll-Trajektorie von einer Mensch-Maschine-Schnittstelle und/oder einem computerimplementierten Verfahren, beispielsweise für automatisiertes oder autonomes Fahren, bereitgestellt. Dies hat den Vorteil, dass die Erfindung mit bekannten Schnittstellen im Kraftfahrzeug kompatibel und/oder auf Standardsysteme anwendbar ist.

Die Erfindung wird nachstehend anhand eines Ausführungsbeispiels unter Bezug auf die beigefügten schematischen Figuren mit weiteren Einzelheiten näher erläutert.

Dabei zeigen
- Fig. 1: ein Blockschaltbild eines erfindungsgemäßen Ausführungsbeispiels eines Verfahrens zur Steuerung des Radschlupfs eines Kraftfahrzeugs; und
- Fig. 2: eine Visualisierung des Fahrzeug- und Reifenmodells, das in dem Verfahren aus Fig. 1 verwendet wird.

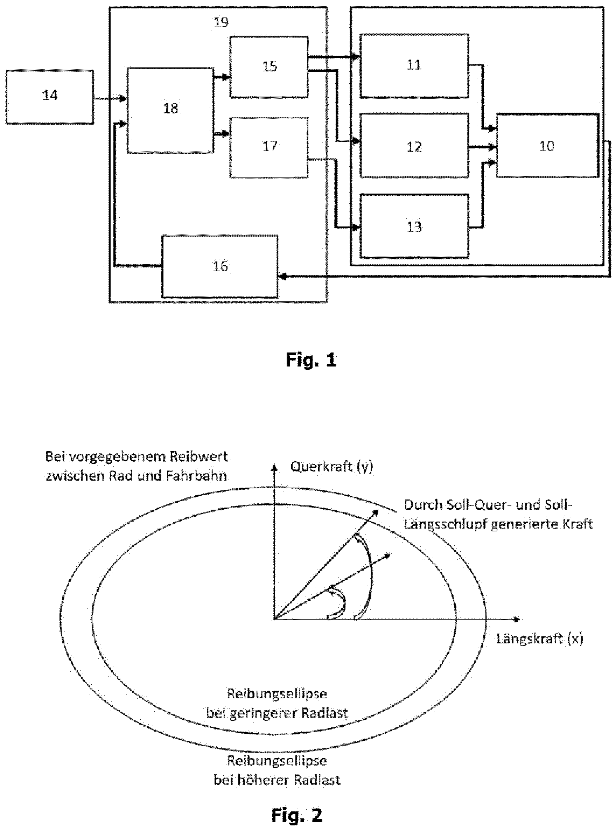

In Fig. 1 ist ein Blockschaltbild eines Verfahrens zur Steuerung des Radschlupfs eines Kraftfahrzeugs (nicht gezeigt).

Das Kraftfahrzeug umfasst ein entsprechendes Steuergerät 19, das zur Durchführung des Verfahrens konfiguriert ist. Das Kraftfahrzeug weist darüber hinaus Radaktuatoren und Räder 10, konkret vier Räder 10, auf. Die Radaktuatoren umfassen ein elektromechanisches Bremssystem 11, ein elektrisches Antriebssystem 12 und ein Steer-by-Wire-Lenksystem 13.

Das Verfahren sieht als ersten Schritt vor, eine Soll-Trajektorie 14 des Kraftfahrzeugs in eine Soll-Bewegung des Kraftfahrzeugs zu übersetzen. Dazu rechnet ein Soll-Bewegungsgenerator 18 die Soll-Trajektorie 14 in eine zwei- oder dreidimensionale Soll-Bewegung des Kraftfahrzeugs, konkret der Räder 10 des Kraftfahrzeugs, um.

Die Soll-Trajektorie 14 wird von einer Mensch-Maschine-Schnittstelle, konkret einem Bediensystem mit Lenkrad, Pedalen und/oder Schalthebel, und/oder einem computerimplementierten Verfahren, konkret einer Software für automatisiertes oder autonomes Fahren, bereitgestellt wird. Im gezeigten Ausführungsbeispiel sind die Mensch-Maschine-Schnittstelle und die Recheneinheit, auf der das computerimplementierte Verfahren ausgeführt wird, Teil des Kraftfahrzeugs, also fahrzeugintern angeordnet. Sowohl die Mensch-Maschine-Schnittstelle als auch die Recheneinheit, auf der das computerimplementierte Verfahren ausgeführt wird, können auch fahrzeugextern, beispielsweise in einer entfernten Zentrale, angeordnet sein. Die Soll-Trajektorie 14 kann auch von anderen Systemen oder computerimplementierten Verfahren bereitgestellt werden.

Gemäß dem nächsten Schritt des Verfahrens bestimmt der Soll-Bewegungsgenerator 18 radindividuelle Soll-Längs- und Soll-Querschlupfwerte 15 für die Räder 10 basierend auf der Soll-Bewegung unter Verwendung eines Fahrzeug- und Reifenmodells 16. Der Soll-Bewegungsgenerator 18 übersetzt also die Soll-Bewegung des Kraftfahrzeugs in jeweils einen eigenen Soll-Längs- und Soll-Querschlupfwert pro Rad, wobei er auf das Fahrzeug- und Reifenmodell 16 zurückgreift.

Die Soll-Längs- und Soll-Querschlupfwerte 15 werden dabei basierend auf den Ist-Längs- und Ist-Querschlupfwerten bestimmt. Konkret berücksichtigt der Soll-Bewegungsgenerator 18 die aktuellen Ist-Längs- und Ist-Querschlupfwerte beim Bestimmen der nächsten Soll-Längs- und Soll-Querschlupfwerte 15. Dadurch wird ein geschlossener Steuerkreis bzw. eine Closed-Loop-Steuerung gebildet.

Der Soll-Bewegungsgenerator 18 bestimmt darüber hinaus einen Soll-Lenkwinkel 17 für das Steer-by-Wire-Lenksystem 13 basierend auf der Soll-Bewegung. Zusätzlich kann der Soll-Lenkwinkel 17 auch in Abhängigkeit der Soll-Längs- und Soll-Querschlupfwerte 15 bestimmt werden. Es ist also möglich, dass der Soll-Lenkwinkel 17 derart bestimmt wird, dass er ein Erreichen der Soll-Längs- und Soll-Querschlupfwerte 15 durch die Ist-Längs- und Ist-Querschlupfwerte unterstützt.

Der letzte Schritt des Verfahrens sieht ein Angleichen der Ist-Längs- und Ist-Querschlupfwerte der Räder 10 an die jeweiligen Soll-Längs- und Soll-Querschlupfwerte 15 durch das elektromechanische Bremssystem 11 und das elektrische Antriebssystem 12 in Abhängigkeit von einem Lenkwinkel, insbesondere Soll-Lenkwinkel 17 und/oder Ist-Lenkwinkel, des Steer-by-Wire-Lenksystems 13 vor. Hierzu werden die Räder 10 in Abhängigkeit vom Lenkwinkel derart durch das elektromechanische Bremssystem 11 und/oder das elektrische Antriebssystem 12 angetrieben und/oder abgebremst, dass eine Änderung der Ist-Längs- und Ist-Querschlupfwerte in Richtung Soll-Längs- und Soll-Querschlupfwerte 15 bewirkt wird.

Das Steer-by-Wire-Lenksystem 13 gleicht den Ist-Lenkwinkel an den Soll-Lenkwinkel 17 an.

Fig. 2 zeigt eine Visualisierung des Fahrzeug- und Reifenmodells 16, das in dem Verfahren aus Fig. 1 verwendet wird.

Das Fahrzeug- und Reifenmodell 16 bildet das Verhältnis der Längs- und Querschlupfwerte zu den maximal übertragbaren Längs- und Querkräften der Räder 10 ab. So kann das Fahrzeug- und Reifenmodell 16 die durch die Soll-Längs- und Soll-Querschlupfwerte 15 generierte Kraft, d. h. Längs- und Querkraft, die zwischen dem Rad und der Fahrbahn wirkt, bestimmen und in Beziehung zur maximal übertragebaren Kraft setzen. Ebenso kann das Fahrzeug- und Reifenmodell 16 die Kombination aus Soll-Längs- und Soll-Querschlupfwerten 15 jedes Rades bestimmen, bei der die im Wesentlichen maximal übertragebare Längs- und Querkraft bzw. eine Längs- und Querkraft mit reduziertem, insbesondere minimalen, Abstand zur Haftgrenze wirkt.

Dabei wird das Verhältnis von den Längs- und Querschlupfwerten zu den maximal übertragbaren Längs- und Querkräften in Abhängigkeit von Radlasten der Räder 10 abgebildet, insbesondere von prognostizierten, statischen und/oder dynamischen Radlasten der Räder 10 abgebildet.

Das Verhältnis von den Längs- und Querschlupfwerten zu den maximal übertragbaren Längs- und Querkräften wird außerdem in Abhängigkeit von einem Reibwert zwischen den Rädern 10 und der Fahrbahn abgebildet, wobei der Reibwert insbesondere basierend auf einer Schätzung bestimmt werden kann.

Das Fahrzeugmodell kann eine Reibungsellipse, insbesondere eine Krempelsche Reibungsellipse umfassen, also eine Darstellung der übertragbaren, insbesondere der maximal übertragbaren, Längs- und Querkräfte eines Rades bei kombiniertem Längs- und Querschlupf des Rades.

Nachstehend wird das Verfahren aus Fig. 1 und Fig. 2 anhand von zwei beispielhaften Fahrmanövern auf einer glatten Fahrbahn erläutert, wobei ein Zusammenstoß des Kraftfahrzeugs mit einem Hindernis, auf das sich das Kraftfahrzeug zubewegt, verhindert werden soll. Die Fahrmanöver werden von einem menschlichen Fahrer durch ein Bediensystem mit wenigstens einem Lenkrad und einem Bremspedal ausgeführt. Die Fahrmanöver können auch von einer Maschine ausgeführt werden.

In einem ersten Fahrmanöver bemerkt der Fahrer das Hindernis und betätigt das Bremspedal, während der Fahrer das Lenkrad gerade, also bei einem Lenkwinkel von im Wesentlichen 0°, hält. Daraufhin werden gemäß dem Verfahren die Soll-Längs- und Soll-Querschlupfwerte 15 derart bestimmt, dass die Verzögerung unter Berücksichtigung von Störkräften auf die Räder 10 und der Gewichtsverlagerung nach vorne, d. h. der Verteilung der Radlasten auf die vorderen Räder 10, maximiert wird.

In einem zweiten Fahrmanöver bemerkt der Fahrer, dass das Hindernis durch ein Lenkmanöver umfahren werden muss, da das Kraftfahrzeug vor dem Hindernis nicht zum Stehen kommen würde. Also bewegt der Fahrer das Lenkrad, sodass sich ein Lenkwinkel von größer/kleiner 0° einstellt, während er das Bremspedal betätigt. Daraufhin werden gemäß dem Verfahren die Soll-Längs- und Soll-Querschlupfwerte 15 dynamisch in Abhängigkeit vom jeweiligen Verhältnis zwischen dem Rad und der Fahrzeugausrichtung, also in Abhängigkeit vom Lenkwinkel, derart gewählt, dass zwischen dem Rad und der Fahrbahn bei jedem Lenkwinkel die im Wesentlichen maximal verfügbare Querkraft übertragen wird. Dazu folgt das Fahrzeug- und Reifenmodell 16 der Reibungsellipse jedes Rades, die die maximal übertragebare Längs- und Querkraft bzw. Haftgrenze repräsentiert, in Abhängigkeit des Lenkwinkels.

Wird während eines hochdynamischen Fahrmanövers die Radlast auf einer Seite des Kraftfahrzeugs besonders gering, so kann gemäß dem Verfahren die Priorität darin bestehen, ein Überrollen des Kraftfahrzeugs um seine Längsachse zu vermeiden. Dazu werden die Soll-Längs- und Soll-Querschlupfwerte 15 derart bestimmt, dass die Querkräfte zwischen den Rädern 10 und der Fahrbahn, beispielsweise durch ein Blockieren der Räder 10, tendenziell abnehmen, sodass das Kraftfahrzeug eher rutscht als überrollt.

Das gezeigte Verfahren kann auch dazu verwendet werden, die Unter- bzw. Übersteuerungscharakteristik des Kraftfahrzeugs durch die radindividuelle Steuerung der Längs- und Querschlupfwerte, insbesondere für Fahrmodi wie Sport, Offroad und/oder Komfort, zu manipulieren.

### Bezugszeichenliste

- 10: Räder
- 11: elektromechanisches Bremssystem
- 12: elektrisches Antriebssystem
- 13: Steer-by-Wire-Lenksystem
- 14: Soll-Trajektorie
- 15: Soll-Längs- und Soll-Querschlupfwerte
- 16: Fahrzeug- und Reifenmodell
- 17: Soll-Lenkwinkel
- 18: Soll-Bewegungsgenerator
- 19: Steuergerät

## Patentansprüche

1. Verfahren zur Steuerung des Radschlupfs eines Kraftfahrzeugs, das wenigstens zwei Räder (10), ein elektromechanisches Bremssystem (11), ein elektrisches Antriebssystem (12) und ein Steer-by-Wire-Lenksystem (13) aufweist, wobei das Verfahren folgende Schritte umfasst:
- Übersetzen einer Soll-Trajektorie (14) des Kraftfahrzeugs in eine Soll-Bewegung des Kraftfahrzeugs;
- Bestimmen von radindividuellen Soll-Längs- und Soll-Querschlupfwerten (15) für die Räder (10) basierend auf der Soll-Bewegung unter Verwendung eines Fahrzeug- und Reifenmodells (16), wobei das Fahrzeug- und Reifenmodell (16) das Verhältnis von Längs- und Querschlupfwerten der Räder (10) zu maximal übertragbaren Längs- und Querkräften der Räder (10) abbildet; und
- Angleichen von Ist-Längs- und Ist-Querschlupfwerten der Räder (10) an die jeweiligen Soll-Längs- und Soll-Querschlupfwerte (15) durch das elektromechanische Bremssystem (11) und das elektrische Antriebssystem (12) in Abhängigkeit von einem Lenkwinkel des Steer-by-Wire-Lenksystems (13).

2. Verfahren nach Anspruch 1,
**dadurch gekennzeichnet, dass** die Soll-Längs- und Soll-Querschlupfwerte (15) basierend auf den Ist-Längs- und Ist-Querschlupfwerten bestimmt werden.

3. Verfahren nach Anspruch 1 oder Anspruch 2,
**dadurch gekennzeichnet, dass** das Verhältnis in Abhängigkeit von, insbesondere prognostizierten, statischen und/oder dynamischen Radlasten der Räder (10) abgebildet wird.

4. Verfahren nach einem der vorhergehenden Ansprüche,
**dadurch gekennzeichnet, dass** das Verhältnis in Abhängigkeit von einem, insbesondere geschätzten, Reibwert zwischen den Rädern (10) und der Fahrbahn abgebildet wird.

5. Verfahren nach einem der vorhergehenden Ansprüche,
**dadurch gekennzeichnet, dass** die Soll-Trajektorie (14) von einer Mensch-Maschine-Schnittstelle und/oder einem computerimplementierten Verfahren bereitgestellt wird.

6. Steuergerät zu Steuerung des Radschlupfs eines Kraftfahrzeugs, das wenigstens zwei Räder (10), ein elektromechanisches Bremssystem (11), ein elektrisches Antriebssystem (12) und ein Steer-by-Wire-Lenksystem (13) aufweist, wobei das Steuergerät zur Durchführung folgender Schritte angepasst ist:
- Übersetzen einer Soll-Trajektorie (14) des Kraftfahrzeugs in eine Soll-Bewegung des Kraftfahrzeugs;
- Bestimmen von radindividuellen Soll-Längs- und Soll-Querschlupfwerten (15) für die Räder (10) basierend auf der Soll-Bewegung unter Verwendung eines Fahrzeug- und Reifenmodells (16), wobei das Fahrzeug- und Reifenmodell (16) das Verhältnis von Längs- und Querschlupfwerten der Räder (10) zu maximal übertragbaren Längs- und Querkräften der Räder (10) abbildet; und
- Angleichen von Ist-Längs- und Ist-Querschlupfwerten der Räder (10) an die jeweiligen Soll-Längs- und Soll-Querschlupfwerte (15) durch das elektromechanische Bremssystem (11) und das elektrische Antriebssystem (12) in Abhängigkeit eines Lenkwinkels des Steer-by-Wire-Lenksystems (13).

7. Kraftfahrzeug mit einem Steuergerät (19) nach Anspruch 6.

## Claims

1. Method for controlling the wheel slip of a motor vehicle having at least two wheels (10), an electromechanical braking system (11), an electric drive system (12) and a steer-by-wire steering system (13), wherein the method comprises the following steps:
- converting a target trajectory (14) of the motor vehicle into a target movement of the motor vehicle;
- determining wheel-specific target longitudinal and target transverse slip values (15) for the wheels (10) based on the target movement using a vehicle and tyre model (16), wherein the vehicle and tyre model (16) maps the ratio of longitudinal and transverse slip values of the wheels (10) to the maximum transmissible longitudinal and transverse forces of the wheels (10); and
- adjusting actual longitudinal and actual transverse slip values of the wheels (10) to the respective target longitudinal and target transverse slip values (15) by the electromechanical brake system (11) and the electric drive system (12) as a function of a steering angle of the steer-by-wire steering system (13).

2. Method according to Claim 1,
**characterized in that** the target longitudinal and target transverse slip values (15) are determined on the basis of the actual longitudinal and actual transverse slip values.

3. Method according to Claim 1 or Claim 2,
**characterized in that** the ratio is mapped as a function of, in particular predicted, static and/or dynamic wheel loads of the wheels (10).

4. Method according to one of the preceding claims,
**characterized in that** the ratio is mapped as a function of a coefficient of friction, in particular an estimated coefficient of friction, between the wheels (10) and the roadway.

5. Method according to one of the preceding claims,
**characterized in that** the target trajectory (14) is provided by a human-machine interface and/or a computer-implemented method.

6. Control device for controlling the wheel slip of a motor vehicle having at least two wheels (10), an electromechanical braking system (11), an electric drive system (12) and a steer-by-wire steering system (13), wherein the control device is adapted to perform the following steps:
- converting a target trajectory (14) of the motor vehicle into a target movement of the motor vehicle;
- determining wheel-specific target longitudinal and target transverse slip values (15) for the wheels (10) based on the target movement using a vehicle and tyre model (16), wherein the vehicle and tyre model (16) maps the ratio of longitudinal and transverse slip values of the wheels (10) to the maximum transmissible longitudinal and transverse forces of the wheels (10); and
- adjusting actual longitudinal and actual transverse slip values of the wheels (10) to the respective target longitudinal and target transverse slip values (15) by the electromechanical brake system (11) and the electric drive system (12) as a function of a steering angle of the steer-by-wire steering system (13).

7. Motor vehicle with a control unit (19) according to Claim 6.

## Revendications

1. Procédé de contrôle du glissement des roues d'un véhicule automobile comportant au moins deux roues (10), un système de freinage électromécanique (11), un système d'entraînement électrique (12) et un système de direction «steer-by-wire» (13), dans lequel le procédé comprend les étapes suivantes:
- convertir une trajectoire cible (14) du véhicule automobile en un mouvement cible du véhicule automobile;
- déterminer, pour les roues (10), des valeurs de glissement longitudinal et transversal cibles (15) spécifiques à chaque roue sur la base du mouvement cible à l'aide d'un modèle de véhicule et de pneu (16), dans lequel le modèle de véhicule et de pneu (16) représente la relation entre des valeurs de glissement longitudinal et transversal des roues (10) et les forces longitudinales et transversales maximales transmissibles des roues (10); et
- ajuster les valeurs de glissement longitudinal et transversal réelles des roues (10) aux valeurs de glissement longitudinal et transversal cibles respectives (15) par le système de freinage électromécanique (11) et le système d'entraînement électrique (12) en fonction d'un angle de braquage du système de direction «steer-by-wire» (13).

2. Procédé selon la revendication 1,
**caractérisé en ce que** les valeurs de glissement longitudinal et transversal cibles (15) sont déterminées sur la base des valeurs de glissement longitudinal et transversal réelles.

3. Procédé selon la revendication 1 ou la revendication 2,
**caractérisé en ce que** la relation est représentée en fonction des charges de roue (10) notamment prédites, statiques et/ou dynamiques des roues (10).

4. Procédé selon l'une des revendications précédentes,
**caractérisé en ce que** le rapport est représenté en fonction d'un coefficient de frottement, en particulier d'un coefficient de frottement estimé, entre les roues (10) et la chaussée.

5. Procédé selon l'une des revendications précédentes,
**caractérisé en ce que** la trajectoire cible (14) est fournie par une interface homme-machine et/ou un procédé mis en œuvre par ordinateur.

6. Dispositif de commande destiné à contrôler le glissement des roues d'un véhicule automobile comportant au moins deux roues (10), un système de freinage électromécanique (11), un système d'entraînement électrique (12) et un système de direction «steer-by-wire» (13), dans lequel le dispositif de commande est adapté pour exécuter les étapes suivantes:
- convertir une trajectoire cible (14) du véhicule automobile en un mouvement cible du véhicule automobile;
- déterminer, pour les roues (10), des valeurs de glissement longitudinal et transversal cibles (15) spécifiques à chaque roue sur la base du mouvement cible à l'aide d'un modèle de véhicule et de pneu (16), dans lequel le modèle de véhicule et de pneu (16) représente la relation entre des valeurs de glissement longitudinal et transversal des roues (10) et les forces longitudinales et transversales maximales transmissibles des roues (10); et
- ajuster les valeurs de glissement longitudinal et transversal réelles des roues (10) aux valeurs de glissement longitudinal et transversal cibles respectives (15) par le système de freinage électromécanique (11) et le système d'entraînement électrique (12) en fonction d'un angle de braquage du système de direction «steer-by-wire» (13).

7. Véhicule automobile comportant un dispositif de commande (19) selon la revendication 6.
